# FASCICULE DE BREVET EUROPEEN

(11) **EP 2 574 210 B1**
(45) Date de publication et mention de la délivrance du brevet: **25.01.2017**
(21) Numéro de dépôt: 11723541.6
(22) Date de dépôt: 29.04.2011
(51) Int. Cl.: G01S 7/481, G01S 17/02, G01S 17/89, G01S 7/499

(54) **DISPOSITIF DE MESURE ALTIMETRIQUE**
HÖHENMESSER
ALTIMETRIC MEASUREMENT DEVICE

(30) Priorité: 05.05.2010 FR 1053514
(43) Date de publication de la demande: 03.04.2013
(73) Titulaire: Airbus Defence and Space SAS, 78130 Les Mureaux (FR); Centre National d'Etudes Spatiales (C.N.E.S.), 75001 Paris (FR)
(72) Inventeur: FABRE, Frédéric, F-31000 Toulouse (FR)
(74) Mandataire: Cabinet Plasseraud
(86) Numéro de dépôt international: PCT/FR2011/050985
(87) Numéro de publication internationale: WO 2011/138544

(56) Documents cités:
- WO-A2-2008/018955
- DE-C1- 3 204 364
- FR-A1- 2 592 721
- US-A- 5 126 869
- US-A- 5 359 403
- US-A1- 2006 262 117
- US-A1- 2008 075 326
- US-A1- 2009 079 839
- US-B1- 7 631 839
- BEN-ARIE J R ET AL: "Development of a pit filling algorithm for LiDAR canopy height models", COMPUTERS AND GEOSCIENCES, PERGAMON PRESS, OXFORD, GB, vol. 35, no. 9, 1 septembre 2009 (2009-09-01), pages 1940-1949, XP026495012, ISSN: 0098-3004, DOI: DOI:10.1016/J.CAGEO.2009.02.003 [extrait le 2009-03-20]

## Description

La présente invention concerne un dispositif de mesure altimétrique pour explorer ou caractériser des zones de la surface de la Terre à partir d'un aéronef ou d'un satellite. Un tel dispositif permet notamment de réaliser des mesures d'altitude de reliefs terrestres, ou des sondages de volumes semi-transparents tels que des couvertures végétales ou des volumes aquatiques.

Des systèmes optiques stéréoscopiques et des systèmes LIDAR, pour «Llght Détection And Ranging», sont déjà utilisés pour explorer la surface terrestre depuis un aéronef ou un satellite, notamment un satellite à basse altitude. Ces deux types de systèmes possèdent des caractéristiques différentes, qui distinguent les applications pour lesquelles chacun des systèmes peut être utilisé.

Les systèmes stéréoscopiques forment plusieurs images, en général deux images, d'une même portion de la surface de la Terre selon des lignes de visée qui ont des inclinaisons différentes. En fait, ces images sont saisies respectivement à des instants différents d'un défilement de l'aéronef ou du satellite au dessus de la surface de la Terre. Pour cela, un système stéréoscopique est adapté pour former et saisir des images selon deux lignes de visée qui présentent entre elles un écart angulaire sélectionné. De tels systèmes stéréoscopiques possèdent un champ d'entrée qui est grand, pouvant correspondre à une largeur de portion de surface terrestre supérieure à quelques kilomètres perpendiculairement à la trace. Par contre, ils sont limités à des mesures altimétriques de reliefs qui sont découverts et aériens. En outre, la précision des mesures altimétriques qui sont réalisées par stéréoscopie est faible, par exemple de l'ordre de quelques mètres, du fait de la séparation physique des deux voies stéréoscopiques et du manque de recalage absolu en altitude.

Les systèmes LIDAR permettent d'obtenir une précision de mesure altimétrique qui est bien meilleure, usuellement inférieure au mètre. Ils permettent en outre de caractériser simultanément des interfaces qui sont alignées dans une direction de pointage et séparées par des milieux semi-transparents. De telles configurations correspondent par exemple à l'exploration du relief de fond d'un lac à travers la surface du lac, ou à des mesures altimétriques à travers une couverture végétale telle qu'une forêt, ou encore à la mesure de l'épaisseur d'une couverture végétale. Mais, le champ au sol qui est exploré lors d'une mesure LIDAR est petit, typiquement de l'ordre de quelques mètres.

DE 3204364 divulgue un dispositif de mesure altimétrique, adapté pour être embarqué à bord d'un aéronef ou d'un satellite et pour effectuer, à partir dudit aéronef ou satellite, une mesure d'altitude d'un relief situé à l'aide d'un Lidar et d'un system d'un système d'imagerie stéréoscopique.

Dans ces conditions, la présente invention a pour but de fournir des mesures altimétriques qui ne présentent pas les inconvénients des systèmes antérieurs. En particulier, elle a pour but de fournir de telles mesures en combinant les avantages du LIDAR, notamment sa bonne précision, et ceux de l'imageur stéréoscopique, notamment un grand champ d'entrée.

Pour cela, l'invention propose un dispositif de mesure altimétrique, qui est adapté pour être embarqué à bord d'un aéronef ou d'un satellite et pour effectuer, à partir de celui-ci, une mesure d'altitude d'un relief situé à la surface de la Terre ou un sondage d'un volume semi-transparent situé aussi à la surface de la Terre. Ce dispositif comprend un système LIDAR, qui inclut lui-même :
- un émetteur LIDAR, qui est adapté pour produire un rayonnement LIDAR primaire, avec le dispositif qui est agencé pour transmettre le rayonnement LIDAR primaire vers la surface de la Terre,
- un collecteur de rayonnement à miroirs, qui est disposé pour collecter un rayonnement LIDAR rétrodiffusé par la surface de la Terre, et
- un récepteur LIDAR, qui est disposé pour recevoir le rayonnement LIDAR rétrodiffusé et collecté.

Le dispositif de l'invention comprend aussi un système d'imagerie stéréoscopique, qui inclut lui-même :
- un ensemble de formation d'image, qui est agencé pour former des images, et
- deux séries de détecteurs d'images, qui sont disposées pour saisir des images respectives de deux portions décalées de la surface de la Terre, à travers l'ensemble de formation d'image selon deux lignes de visée différentes.

Selon l'invention, le collecteur de rayonnement est commun au système LIDAR et à l'ensemble de formation d'image du système d'imagerie stéréoscopique. Le dispositif est alors agencé pour diriger une première partie d'un rayonnement total collecté par le collecteur de rayonnement vers le récepteur LIDAR, et une seconde partie de ce rayonnement total collecté vers les deux séries de détecteurs d'images du système d'imagerie stéréoscopique. Un tel agencement peut avantageusement être réalisé à l'aide d'un diviseur de faisceau.

Ainsi, l'invention propose un nouveau dispositif de mesure altimétrique, qui est une combinaison d'un système LIDAR et d'un système d'imagerie stéréoscopique. Ce dispositif possède des dimensions, un poids total et un prix total qui sont réduits, grâce au partage du collecteur de rayonnement entre le système LIDAR et le système d'imagerie stéréoscopique. Un tel dispositif est en outre particulièrement adapté pour être utilisé à bord d'un aéronef ou d'un satellite, notamment parce que ses dimensions et son poids réduits participent à réduire aussi les dimensions d'un tel engin porteur. Dans le cas de l'utilisation à bord d'un satellite, le coût de lancement du satellite est aussi réduit en conséquence.

En outre, un tel dispositif regroupe les avantages qui sont procurés par chacun des systèmes :
- le système LIDAR permet des mesures d'altitude qui sont très précises, et des mesures à travers des volumes semi-transparents, tels que des couvertures végétales ou des milieux aquatiques ; et
- le système d'imagerie stéréoscopique permet de couvrir un champ qui est large à chaque séquence de mesure.

De plus, les mesures qui sont réalisées avec le système LIDAR permettent de corriger l'imprécision des mesures qui sont effectuées avec le système d'imagerie stéréoscopique. Autrement dit, les mesures LIDAR peuvent être utilisées pour étalonner les mesures stéréoscopiques.

Chaque série de détecteurs d'images, qui est associée à l'une des deux lignes de visée du système d'imagerie stéréoscopique, peut être constituée d'un ou plusieurs détecteur(s) d'image(s), qui est (sont) disposé(s) pour constituer un champ total d'entrée selon cette ligne de visée.

Selon un premier perfectionnement de l'invention, le collecteur de rayonnement à miroirs peut en outre être disposé pour transmettre le rayonnement LIDAR primaire vers la surface de la Terre. Dans ce cas, le collecteur de rayonnement possède simultanément les trois fonctions suivantes : transmettre vers la Terre le rayonnement LIDAR primaire qui est produit par l'émetteur LIDAR, collecter le rayonnement LIDAR qui est rétrodiffusé par la surface de la Terre, et collecter le rayonnement provenant de la surface de la Terre qui est utilisé par le système d'imagerie stéréoscopique pour former les images des portions décalées de la surface de la Terre.

Selon un deuxième perfectionnement de l'invention, un support commun qui est disposé pour porter ensemble les deux séries de détecteurs d'images du système d'imagerie stéréoscopique, peut porter en outre le récepteur LIDAR. De cette façon, la direction de pointage du récepteur LIDAR est fixe par rapport aux lignes de visée des détecteurs d'images du système stéréoscopique. Autrement dit, l'orientation de la direction de pointage LIDAR par rapport aux images qui sont saisies par le système stéréoscopique n'est pas modifiée par des distorsions mécaniques ou des déplacements thermoélastiques qui affecteraient le récepteur LIDAR et les détecteurs d'images.

Selon un troisième perfectionnement de l'invention, le dispositif peut inclure en outre un troisième détecteur d'image, qui est adapté pour détecter une partie du rayonnement LIDAR rétrodiffusé reçue à travers l'ensemble de formation d'image. Ce troisième détecteur saisit alors une image d'une troisième portion de la surface de la Terre, qui est formée par l'ensemble de formation d'image avec la partie détectée du rayonnement LIDAR rétrodiffusé. Ce troisième détecteur d'image peut avantageusement être aussi porté par le même support commun que les deux premiers détecteurs d'images du système stéréoscopique. De cette façon, les images qui sont fournies par le système stéréoscopique peuvent comporter une trace de l'impact du faisceau du rayonnement LIDAR primaire dans la partie de surface de la Terre qui est explorée. Le résultat de la mesure altimétrique LIDAR peut alors être affecté précisément au point de la surface de la Terre qui est superposé à cette trace dans l'image stéréoscopique. Le résultat de la mesure LIDAR peut ainsi servir de valeur de référence pour affiner les résultats de mesure altimétrique qui sont fournis par le système stéréoscopique en dehors du point de mesure LIDAR.

Dans des premiers modes de réalisation d'un dispositif conforme à l'invention, l'émetteur LIDAR peut être adapté pour produire le rayonnement LIDAR primaire avec une première longueur d'onde qui est comprise entre 0,3 µm et 1,6 µm. Le système d'imagerie stéréoscopique peut être simultanément adapté pour former et saisir des images dans toute bande de longueurs d'onde comprises entre 0,3 µm et 1,6 µm. Le dispositif est alors approprié pour mesurer une épaisseur de couverture végétale présente à la surface de la Terre, ou pour caractériser un relief terrestre sous couverture végétale. Pour ces applications, l'invention propose en outre un procédé utilisant un dispositif de mesure altimétrique qui est conforme à ces premiers modes de réalisation, et qui est embarqué à bord d'un aéronef ou d'un satellite.

Dans des seconds modes de réalisation d'un dispositif conforme à l'invention, l'émetteur LIDAR peut être adapté pour produire le rayonnement LIDAR primaire avec une première longueur d'onde qui est comprise entre 0,3 µm et 1 µm, et une seconde longueur d'onde qui est comprise entre 0,7 µm et 1,6 µm. Le système d'imagerie stéréoscopique est alors adapté pour former et saisir des images dans toute bande de longueurs d'onde comprises entre 0,3 µm et 1,6 µm. Le dispositif est alors approprié pour effectuer des mesures bathymétriques à travers un volume aquatique présent à la surface de la Terre, tel qu'un lac ou une étendue maritime. Pour réaliser de telles mesures bathymétriques, l'invention propose alors aussi un procédé utilisant un dispositif de mesure altimétrique qui est conforme à ces seconds modes de réalisation, et qui est embarqué à bord d'un aéronef ou d'un satellite.

D'autres particularités et avantages de la présente invention apparaîtront dans la description ci-après d'exemples de réalisation non limitatifs, en référence aux dessins annexés, dans lesquels :
- la figure 1 est un schéma synoptique d'un dispositif de mesure altimétrique selon l'invention ;
- les figures 2a et 2b sont deux schémas de coupleurs optiques pouvant être utilisés alternativement dans un dispositif de mesure altimétrique selon l'invention ;
- la figure 3 est un schéma optique d'un collecteur de rayonnement pouvant être utilisé dans un dispositif de mesure altimétrique selon l'invention ; et
- la figure 4 reproduit dans son principe une cartographie de relief terrestre obtenue en utilisant un dispositif de mesure altimétrique selon l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

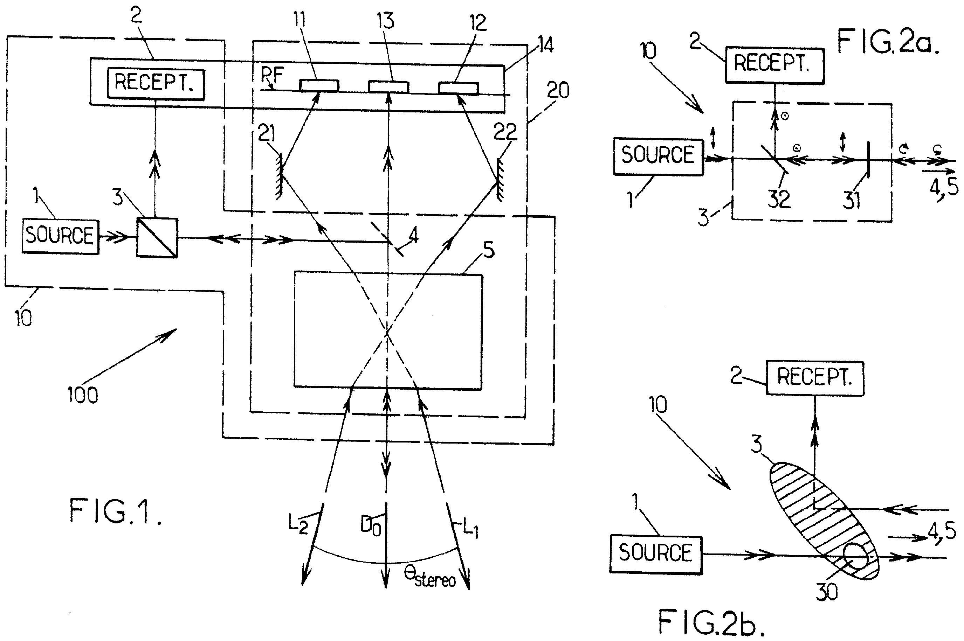

Conformément à la figure 1, un dispositif de mesure altimétrique selon l'invention, qui est désigné dans son ensemble par la référence 100, comprend un système LIDAR 10 et un système d'imagerie stéréoscopique 20.

Le système LIDAR 10 comprend lui-même un émetteur LIDAR, qui est noté SOURCE et référencé 1, et un récepteur LIDAR, qui est noté RECEPT. et référencé 2. L'émetteur 1 et le récepteur 2 peuvent être d'un type connu de l'Homme du métier, et disponibles commercialement. L'émetteur 1 est disposé pour émettre un rayonnement LIDAR primaire vers un champ cible qui est distant du dispositif 100. En particulier, ce champ cible peut être une portion de la surface de la Terre lorsque le dispositif 100 est utilisé à bord d'un aéronef ou d'un satellite, pour réaliser des mesures altimétriques dans cette portion de surface terrestre. Conformément au fonctionnement connu d'un système LIDAR, des objets ou reliefs qui sont contenus dans le champ cible produisent, sous l'effet du rayonnement LIDAR primaire, un rayonnement LIDAR rétrodiffusé. Ce rayonnement LIDAR rétrodiffusé est collecté en retour par une optique 5, puis dirigé vers le récepteur LIDAR 2.

De façon générale, l'émetteur 1 et le récepteur 2 sont assemblés au sein du dispositif 100 pour être fixes l'un par rapport à l'autre pendant une utilisation du dispositif. Autrement dit, les positions relatives de l'émetteur 1 et du récepteur 2 sont constantes, de sorte qu'ils ont des axes optiques d'émission et de réception du rayonnement LIDAR qui coïncident en permanence, malgré d'éventuelles distorsions que peut subir le système 10.

De préférence, le système LIDAR 10 est du type monostatique, c'est-à-dire que l'émetteur LIDAR 1 et le récepteur LIDAR 2 utilisent la même optique 5, pour transmettre le rayonnement LIDAR primaire vers la Terre d'une part et pour collecter le rayonnement LIDAR rétrodiffusé d'autre part. Les voies d'émission et de réception LIDAR qui sont ainsi mises en oeuvre et qui ont en commun l'optique 5, constituent le système LIDAR 10 dont le fonctionnement est supposé connu et n'est pas répété ici. Plusieurs coupleurs optiques 3 peuvent être utilisés alternativement pour faire passer simultanément les voies d'émission et de réception LIDAR à travers l'optique 5.

Selon une première possibilité qui est illustrée par la figure 2a, l'émetteur LIDAR 1 peut être adapté pour produire le rayonnement LIDAR primaire avec une première polarisation qui est rectiligne. Le système LIDAR 10 inclut alors en outre :
- une lame quart d'onde 31, qui est disposée entre l'émetteur LIDAR 1 et l'optique 5, pour transmettre le rayonnement LIDAR primaire en transformant la première polarisation rectiligne en première polarisation circulaire du rayonnement LIDAR primaire qui est transmis par l'optique 5. Simultanément, la lame quart d'onde 31 est aussi disposée pour transmettre en sens inverse le rayonnement LIDAR rétrodiffusé et collecté qui possède une seconde polarisation circulaire opposée à la première polarisation circulaire, en transformant la seconde polarisation circulaire en seconde polarisation rectiligne, les première et seconde polarisations rectilignes étant perpendiculaires entre elles ; et
- un séparateur de polarisations rectilignes 32, par exemple sous la forme d'une lame ou d'un cube, qui est disposé pour diriger le rayonnement LIDAR primaire produit par l'émetteur LIDAR 1 vers la lame quart d'onde 31 d'une part, et pour diriger le rayonnement LIDAR rétrodiffusé et collecté et transmis par la lame quart d'onde 31 vers le récepteur LIDAR 2 d'autre part.

La lame quart d'onde 31 et le séparateur de polarisations rectilignes 32 forment alors ensemble le coupleur optique 3. Un tel couplage des voies d'émission et de réception LIDAR est donc basé sur la séparation de polarisations rectilignes du rayonnement LIDAR.

Selon une seconde possibilité qui est illustrée par la figure 2b, le couplage des voies d'émission et de réception LIDAR peut être basé sur une séparation de pupille. Pour cela, le système LIDAR 10 peut inclure en outre un miroir 3 qui est disposé pour réfléchir le rayonnement LIDAR rétrodiffusé et collecté vers le récepteur LIDAR 2. Ce miroir 3 comporte une ouverture 30 qui est agencée pour transmettre le rayonnement LIDAR primaire produit par l'émetteur LIDAR 1 vers l'optique 5. La surface de l'ouverture 30 peut être de l'ordre de 10% de celle du miroir 3, par exemple. Cette seconde possibilité permet une détection selon les deux axes de polarisation, dans le cas où la scène observée dépolariserait le rayonnement LIDAR.

D'autres réalisations qui sont équivalentes peuvent encore être utilisées pour le coupleur optique interne au système LIDAR 10.

Le récepteur LIDAR 2, l'émetteur LIDAR 1 et l'optique 5, par leurs positions respectives, définissent une direction de pointage du système LIDAR 10, qui est notée D₀. Les résultats de mesures altimétriques qui sont produits par le système LIDAR 10 caractérisent alors la zone du champ d'entrée de l'optique 5 qui est située le long de la direction de pointage D₀. Pour une mise en oeuvre à partir d'un satellite à basse altitude, cette zone possède un diamètre que quelques mètres, par exemple 3 m, à la surface de la Terre.

Le système d'imagerie stéréoscopique 20 comprend lui-même un ensemble de formation d'image qui est agencé pour former une image dans un plan focal PF, et deux détecteurs d'images 11 et 12 qui sont disposés dans ce plan focal PF. De cette façon, les détecteurs 11 et 12 peuvent saisir à travers l'ensemble de formation d'image, des images respectives de portions cibles qui sont contenues dans le champ d'entrée de l'ensemble de formation d'image, et qui sont décalées selon deux lignes de visée différentes. Ces lignes de visée sont référencées L₁ et L₂ sur la figure 1. Selon l'invention, l'ensemble de formation d'image du système 20 inclut l'optique 5 pour recevoir le rayonnement à partir duquel les images sont formées sur les détecteurs 11 et 12. Pour cette raison, l'optique 5 est appelée collecteur de rayonnement du dispositif 100. Eventuellement, l'ensemble de formation d'image du système d'imagerie stéréoscopique peut comprendre, en plus de l'optique 5, un ensemble optique de relais d'image (non représenté) qui est disposé entre l'optique 5 et les détecteurs 11 et 12.

Chacun des détecteurs d'image 11 et 12 peut être constitué par une matrice de photodétecteurs agencés en lignes et en colonnes perpendiculaires entre elles. Eventuellement, chaque détecteur d'image 11 ou 12 peut être constitué lui-même d'une série de telles matrices juxtaposées dans le plan focal PF, pour augmenter le champ optique d'entrée du système d'imagerie stéréoscopique 20 selon chaque ligne de visée.

L'optique 5 est ainsi commune au système LIDAR 10 et au système d'imagerie stéréoscopique 20. Dans une configuration possible du dispositif 100, il peut comprendre en outre un diviseur de faisceau 4. Ce diviseur de faisceau 4 est disposé pour diriger une partie du rayonnement LIDAR rétrodiffusé et collecté par l'optique 5, vers le récepteur LIDAR 2, et pour diriger simultanément vers les détecteurs 11 et 12, une autre partie du rayonnement total qui est collecté par l'optique 5 pour former les images qui sont saisies par ces deux détecteurs. Dans une réalisation simple du dispositif 100, le diviseur de faisceau 4 peut être une lame semi-réfléchissante de taille limitée, qui est disposée seulement sur le trajet du rayonnement LIDAR rétrodiffusé, en aval de l'optique 5 par rapport au sens de propagation du rayonnement collecté. Par exemple, une telle lame semi-réfléchissante peut être adaptée pour diriger vers le récepteur LIDAR 2 moins de 85% du flux du rayonnement total qui est collecté par l'optique 5, et pour diriger vers les détecteurs d'images 11 et 12 au moins 15% de ce flux de rayonnement total collecté. Mais d'autres réalisations du diviseur de faisceau 4 peuvent être utilisées alternativement, de façon équivalente. En particulier, une division spectrale peut être utilisée.

Les deux détecteurs d'images 11, 12 et l'optique 5, par leurs positions respectives, définissent les lignes de visée L₁ et L₂ du système d'imagerie stéréoscopique 20. Afin que ces lignes de visée L₁ et L₂ conservent en permanence un écart angulaire θ_{stéréo} qui est constant, même si des distorsions mécaniques sont transmises au système d'imagerie stéréoscopique 20, les détecteurs d'images 11 et 12 sont avantageusement portés par un support commun, qui est référencé 14.

Eventuellement, pour déterminer les deux lignes de visée L₁ et L₂ du système d'imagerie stéréoscopique 20 à travers l'optique 5, avec les positions des deux détecteurs d'images 11 et 12, le système 20 peut comprendre en outre une série de miroirs supplémentaires, par exemple deux miroirs supplémentaires 21 et 22. Ces miroirs 21 et 22 sont associés respectivement aux deux détecteurs d'images 11 et 12, et disposés entre l'optique 5 et ceux-ci. De cette façon, l'écartement entre les deux détecteurs 11 et 12 sur le support 14 peut être rendu indépendant de l'écart angulaire θ_{stéréo} qui est présent entre les deux lignes de visée L₁ et L₂, en ajustant les orientations des miroirs 21 et 22. De préférence, les miroirs 21 et 22 sont plans.

De préférence, le système LIDAR 10 et le système d'imagerie stéréoscopique 20 sont disposés pour que la direction de pointage D₀ du système LIDAR soit située angulairement au milieu des deux lignes de visée L₁ et L₂ du système d'imagerie stéréoscopique. Un tel ajustement peut être réalisé en inclinant convenablement la lame semi-réfléchissante du diviseur de faisceau 4, par exemple.

Afin d'assurer que la direction de pointage D₀ du système LIDAR 10 possède une orientation constante par rapport aux lignes de visée L₁ et L₂ du système d'imagerie stéréoscopique 20, le support commun 14 peut porter en outre le récepteur LIDAR 2.

Le perfectionnement de l'invention qui est maintenant décrit permet de superposer une trace de l'impact au sol du rayonnement LIDAR à des images supplémentaires qui sont saisies de la zone terrestre étudiée. Pour cela, un troisième détecteur d'image 13 est ajouté sur le support commun 14. Ce peut être une autre matrice de photodétecteurs, par exemple du même type que celles des détecteurs d'images 11 et 12. Le détecteur 13 est destiné à détecter une partie du rayonnement LIDAR rétrodiffusé qui est reçue à travers l'ensemble de formation d'image du système d'imagerie stéréoscopique 20. Autrement dit, une image supplémentaire est formée par l'optique 5 sur le détecteur 13, à partir d'une partie du rayonnement LIDAR rétrodiffusé qui est collectée et transmise vers le support 14 par le diviseur de faisceau 4. Cette image supplémentaire correspond à la partie de la zone cible qui reçoit le rayonnement LIDAR, centrée sur la direction de pointage D₀ du système LIDAR 10. En connaissant les positions relatives des trois détecteurs 11, 12 et 13, il est alors possible de situer précisément la position de la zone cible qui reçoit le rayonnement LIDAR au sein du champ de mesure du système stéréoscopique 20. Eventuellement, le détecteur 13 peut correspondre à un champ d'entrée qui est plus large que la zone cible qui reçoit réellement le rayonnement LIDAR primaire, de sorte que cette zone cible du système LIDAR 10 soit toujours incluse dans une image d'une portion plus large de la surface de la Terre qui est saisie par le détecteur 13, même en présence de distorsions mécaniques résiduelles. Avantageusement, lorsque la direction de pointage D₀ est située angulairement entre les lignes de visée L₁ et L₂, la position du détecteur d'image 13 peut être ajustée sur le support commun 14 pour que ce détecteur 13 définisse une troisième ligne de visée à travers l'optique 5, qui soit superposée à la direction de pointage D₀.

Un système d'imagerie stéréoscopique, qui peut notamment être mis en oeuvre à partir d'un aéronef ou d'un satellite, est caractérisé usuellement par le quotient de stéréoscopie B/H. H est la distance entre le système et le sol, c'est-à-dire l'altitude du satellite, et B est la longueur de déplacement du système au dessus du sol, entre les deux instants de saisie d'images d'une même portion cible du sol, respectivement selon les deux lignes de visée. La précision d'une mesure d'altitude par le système stéréoscopique dépend, d'une façon connue, de la valeur du quotient B/H et de la taille de la pupille d'entrée de l'ensemble de formation d'image pour chaque ligne de visée. Cette précision de mesure altimétrique croît en fonction de la valeur du quotient B/H, et en fonction de la taille de pupille. Or il est difficile de réaliser un système d'imagerie stéréoscopique avec la même optique 5 qui est commune aux deux voies stéréoscopiques, et pour lequel le quotient B/H et la pupille soient simultanément importants. Ainsi, l'ensemble de formation d'image a de préférence soit une valeur importante du quotient B/H avec une pupille qui est plus petite, soit une valeur du quotient B/H qui est plus faible avec une pupille qui est plus grande.

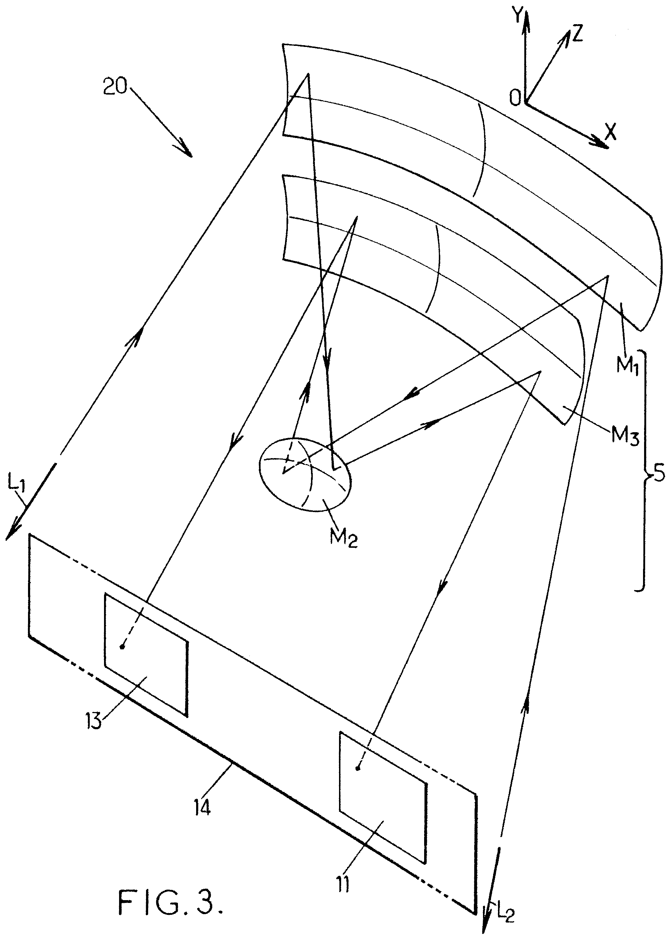

En référence à la figure 3, on décrit maintenant un ensemble de formation d'image qui peut constituer l'optique 5, et qui correspond à une valeur du quotient de stéréoscopie B/H comprise entre 0,2 et 0,4, de préférence entre 0,25 et 0,35. Par exemple, le quotient B/H est égal à 0,3. Autrement dit, en reprenant les références des composants du dispositif 100 de la figure 1, les deux détecteurs d'images 11 et 12 du système d'imagerie stéréoscopique 20 sont disposés de sorte que les deux lignes de visée L₁ et L₂ soient séparées angulairement de 2 x Arctan(0,5 x B/H), c'est-à-dire θₛₜₑᵣₑₒ est égal à 17° (degrés) pour B/H = 0,3, sans prendre en compte la rotondité de la Terre. Une telle optique 5 peut posséder, pour chaque ligne de visée L₁ et L₂, un diamètre de pupille d'entrée qui est supérieur à 0,2 m, voire compris entre 0,25 m et 0,35 m. Dans ce mode de réalisation qui est donné à titre d'exemple non limitatif, l'optique 5 comprend, pour chaque ligne de visée L₁ et L₂, une portion d'un miroir primaire concave M₁, une portion d'un miroir secondaire convexe M₂, et une portion d'un troisième miroir M₃ qui est concave. En outre, ces miroirs sont agencés pour constituer un télescope à trois miroirs anastigmatique («Three Mirror Anastigmat telescope» ou TMA en anglais). Les miroirs M₁, M₂ et M₃ peuvent être continus entre les portions de chacun d'eux qui sont utiles pour réfléchir des rayons qui parviennent aux détecteurs 11 et 12, respectivement selon les lignes de visée L₁ et L₂. Alternativement, ils peuvent être limités à ces portions utiles qui sont alors séparées latéralement. Dans cette configuration de l'optique 5, sa pupille peut être positionnée sur le miroir primaire M₁ ou sur le miroir secondaire M₂.

Pour raison de clarté, le diviseur de faisceau 4 n'a pas été représenté sur la figure 3, ni le troisième détecteur d'image 13, ni les miroirs optionnels 21 et 22. Le cas échéant, le détecteur 13 pourrait être situé sur le support 14, entre les détecteurs 11 et 12.

A titre d'exemple, les rayons de courbure moyens peuvent être 4789,32 mm (millimètre) pour le miroir primaire concave M₁, 1717,90 mm pour le miroir secondaire convexe M₂, et 2618,52 mm pour le troisième miroir concave M₃. L'Homme du métier saura alors sélectionner les valeurs des coefficients de conicité et d'asphérisation des trois miroirs. Les trois miroirs M₁, M₂ et M₃ sont disposés chacun symétriquement par rapport à un plan (O, Y, Z) d'un système d'axes orthogonaux (X, Y, Z) d'origine O. Le plan (O, Y, Z) contient leurs sommets respectifs, aussi appelés «apex» en anglais, ainsi que leurs axes optiques respectifs. A l'intérieur du plan (O, Y, Z) et par rapport à l'axe X, l'axe optique du miroir M₁ est incliné de 5,31° (degré), l'axe optique du miroir M₂ est incliné de 5,91°, et l'axe optique du miroir M₃ est incliné de 12,75°. Simultanément, les sommets des miroirs sont décalés par rapport à l'axe Z, parallèlement à l'axe Y, de 257,36 mm pour le miroir M₁, 134,61 mm pour le miroir M₂, et 602,71 mm pour le miroir M₃. Les sommets respectifs des miroirs M₁ et M₃ sont simultanément décalés par rapport au sommet du miroir M₂, le long de l'axe Z, de 1305 mm et 1144 mm, respectivement. Dans ces conditions, le plan focal PF qui contient les détecteurs 11 et 12 est situé à 1687 mm du sommet du miroir M₃, encore le long de l'axe Z. Le télescope qui est ainsi formé par l'optique 5 est du type hors d'axe. Il est alors entendu que chacun des trois miroirs réels correspond à une partie utile de la surface optique correspondante qui vient d'être définie, sans nécessairement en contenir le sommet. Par exemple, les dimensions et formes des miroirs peuvent être : 1290 mm x 490 mm pour le miroir M₁ rectangulaire, un diamètre de 136 mm pour le miroir M₂ circulaire, et 1040 mm x 322 mm pour le miroir M₃ rectangulaire.

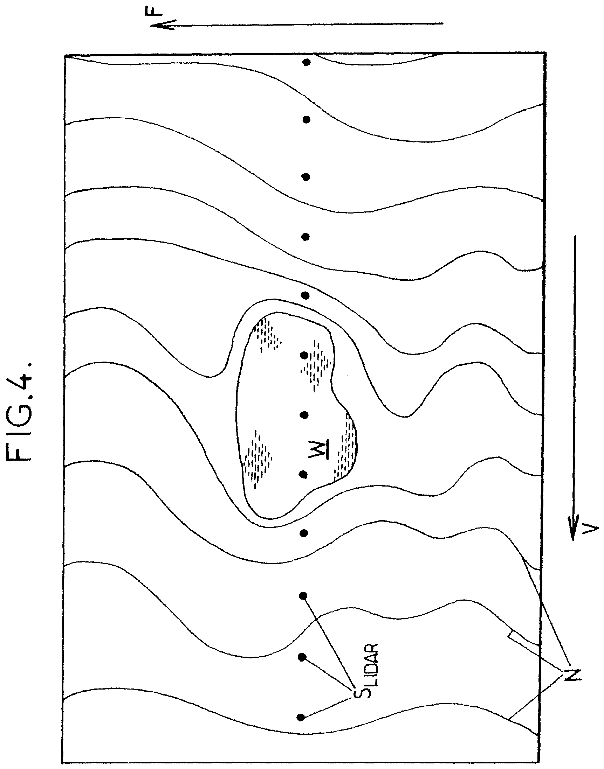

La figure 4 reproduit une cartographie de relief terrestre qui peut être obtenue à l'aide d'un dispositif 100 selon l'invention, embarqué à bord d'un satellite. Les directions V et F sont respectivement la direction de défilement du satellite ou de l'aéronef au dessus du sol et la direction perpendiculaire à ce défilement, parallèle à la surface de la Terre. La direction F est appelée direction de largeur de fauchée dans le jargon de l'Homme du métier. Les lignes de niveau N sont déduites des images stéréoscopiques qui sont produites par le système 20. Les points notés S_{LIDAR} sont les images du faisceau de rayonnement LIDAR, qui sont saisies par le détecteur d'image 13 lorsque celui-ci est utilisé. Le système LIDAR 10 fournit des valeurs d'altitude qui sont précises pour chacun des points S_{LIDAR}. Ces valeurs de mesure LIDAR peuvent alors être utilisées pour étalonner les lignes de niveau N, à l'emplacement de chaque point S_{LIDAR}. Un tel étalonnage peut ensuite être propagé dans toute la cartographie grâce au système d'imagerie stéréoscopique 20. Ainsi, un dispositif 100 selon l'invention peut fournir une cartographie de relief terrestre avec une précision supérieure. La zone qui est désignée par W dans la cartographie de la figure 4 correspond à un lac. Le système d'imagerie stéréoscopique 20 ne fournit donc pas de lignes de niveau dans cette zone W qui est radiométriquement uniforme. Toutefois, le système LIDAR 10 produit une mesure de la profondeur du lac en chacun des points S_{LIDAR} qui sont situés dans la zone W.

Eventuellement, la largeur de fauchée selon la direction F peut être augmentée en réalisant un balayage de la surface terrestre perpendiculairement à la direction V de défilement du satellite. De façon connue, un tel balayage peut être réalisé en basculant le satellite dans son ensemble, ou bien, lorsque l'attitude du satellite est constante, en variant l'orientation du dispositif 100 par rapport au satellite ou en variant l'orientation d'un miroir mobile qui est placé devant l'entrée de l'optique 5.

Enfin, il est rappelé qu'il n'est pas indispensable pour l'invention que le rayonnement LIDAR primaire soit transmis par l'émetteur LIDAR 1 vers la Terre à travers l'optique 5. Il peut être transmis vers la Terre à travers une optique séparée, de sorte que l'optique 5 n'appartienne pas à la voie d'émission LIDAR. L'optique 5 n'est alors partagée que par la voie de réception LIDAR et le système d'imagerie stéréoscopique 20. Dans le jargon de l'Homme du métier, le système LIDAR 10 est alors dit monostatique en réception et bistatique en émission.

## Revendications

1. Dispositif de mesure altimétrique (100), adapté pour être embarqué à bord d'un aéronef ou d'un satellite et pour effectuer, à partir dudit aéronef ou satellite, une mesure d'altitude d'un relief situé à la surface de la Terre ou un sondage d'un volume semi-transparent situé à ladite surface de la Terre, ledit dispositif comprenant :
- un système LIDAR (10) incluant lui-même:
. un émetteur LIDAR (1) adapté pour produire un rayonnement LIDAR primaire, le dispositif (100) étant agencé pour transmettre le rayonnement LIDAR primaire vers la surface de la Terre (T),
. un collecteur de rayonnement à miroirs (5) disposé pour collecter un rayonnement LIDAR rétrodiffusé par ladite surface de la Terre, et
. un récepteur LIDAR (2) disposé pour recevoir le rayonnement LIDAR rétrodiffusé et collecté ; et
- un système d'imagerie stéréoscopique (20) incluant lui-même:
. un ensemble de formation d'image agencé pour former des images dans un plan focal (PF) et
. deux détecteurs d'images (11, 12) disposés dans le plan focal (PF) de l'ensemble de formation d'image, pour saisir des images respectives de deux portions décalées de la surface de la Terre, à travers l'ensemble de formation d'image selon deux lignes de visée différentes (L₁, L₂),
le dispositif (100) étant **caractérisé en ce que** le collecteur de rayonnement (5) comprend une optique commune au système LIDAR (10) et à l'ensemble de formation d'image du système d'imagerie stéréoscopique (20) pour les deux lignes de visées (L₁, L₂), ledit dispositif étant agencé pour diriger une première partie d'un rayonnement total collecté par le collecteur de rayonnement (5) vers le récepteur LIDAR (2), et une seconde partie dudit rayonnement total collecté vers les deux détecteurs d'images (11, 12) du système d'imagerie stéréoscopique.

2. Dispositif selon la revendication 1, comprenant en outre un diviseur de faisceau (4) disposé pour diriger la première partie du rayonnement total collecté par le collecteur de rayonnement (5) vers le récepteur LIDAR (2), et la seconde partie dudit rayonnement total collecté vers les deux détecteurs d'images (11, 12) du système d'imagerie stéréoscopique (20).

3. Dispositif selon la revendication 2, dans lequel le diviseur de faisceau (4) est une lame semi-réfléchissante.

4. Dispositif selon l'une quelconque des revendications précédentes, dans lequel le collecteur de rayonnement à miroirs (5) est en outre disposé pour transmettre vers la surface de la Terre (T) le rayonnement LIDAR primaire produit par l'émetteur LIDAR (1).

5. Dispositif selon la revendication 4, dans lequel l'émetteur LIDAR (1) est adapté pour produire le rayonnement LIDAR primaire avec une première polarisation rectiligne, le système LIDAR (10) incluant en outre :
- une lame quart d'onde (31) disposée entre ledit émetteur LIDAR (1) et le collecteur de rayonnement (5) pour transmettre le rayonnement LIDAR primaire en transformant ladite première polarisation rectiligne en première polarisation circulaire du rayonnement LIDAR primaire transmis par ledit collecteur de rayonnement, et pour transmettre en sens inverse le rayonnement LIDAR rétrodiffusé et collecté ayant une seconde polarisation circulaire opposée à ladite première polarisation circulaire, en transformant ladite seconde polarisation circulaire en seconde polarisation rectiligne perpendiculaire à ladite première polarisation rectiligne ; et
- un séparateur de polarisations rectilignes (32) disposé pour diriger le rayonnement LIDAR primaire produit par l'émetteur LIDAR (1) vers la lame quart d'onde (31) d'une part, et pour diriger le rayonnement LIDAR rétrodiffusé et collecté et transmis par la lame quart d'onde vers le récepteur LIDAR (2) d'autre part.

6. Dispositif selon la revendication 4, dans lequel le système LIDAR (10) inclut en outre un miroir (3) disposé pour réfléchir le rayonnement LIDAR rétrodiffusé et collecté vers le récepteur LIDAR (2), ledit miroir comportant une ouverture (30) agencée pour transmettre le rayonnement LIDAR primaire produit par l'émetteur LIDAR (1) vers le collecteur de rayonnement (5).

7. Dispositif selon l'une quelconque des revendications précédentes, comprenant en outre un support commun (14) disposé pour porter ensemble les deux détecteurs d'images (11, 12) du système d'imagerie stéréoscopique (20), ledit support commun portant en outre le récepteur LIDAR (2).

8. Dispositif selon la revendication 7, dans lequel le support commun (14) porte en outre un troisième détecteur d'image (13) adapté pour détecter une partie du rayonnement LIDAR rétrodiffusé reçue à travers l'ensemble de formation d'image du système d'imagerie stéréoscopique (20), et pour saisir une image d'une troisième portion de la surface de la Terre formée par ledit ensemble de formation d'image avec ladite partie du rayonnement LIDAR rétrodiffusé.

9. Dispositif selon l'une quelconque des revendications précédentes, dans lequel le système LIDAR (10) et le système d'imagerie stéréoscopique (20) sont disposés de sorte qu'une direction de pointage (D₀) dudit système LIDAR soit située angulairement au milieu des deux lignes de visée (L₁, L₂) dudit système d'imagerie stéréoscopique.

10. Dispositif selon l'une quelconque des revendications précédentes, comprenant en outre une série de miroirs supplémentaires (21, 22) associés aux deux détecteurs d'images (11, 12) du système d'imagerie stéréoscopique (20), pour déterminer avec des positions des dits deux détecteurs d'images, les deux lignes de visée (L₁, L₂) dudit système d'imagerie stéréoscopique à travers le collecteur de rayonnement (5).

11. Dispositif selon l'une quelconque des revendications précédentes, dans lequel :
- les deux détecteurs d'images (11, 12) du système d'imagerie stéréoscopique (20) sont disposées de sorte que les deux lignes de visée (L₁, L₂) dudit système d'imagerie stéréoscopique sont séparées angulairement de 2 x Arctan(0,5 x B/H), B/H désignant un quotient de stéréoscopie compris entre 0,2 et 0,4 ; et
- pour chaque ligne de visée (L₁, L₂), le collecteur de rayonnement (5) comprend une portion d'un miroir primaire concave (M₁), une portion d'un miroir secondaire convexe (M₂), et une portion d'un troisième miroir concave (M₃), les dits miroirs étant agencés pour constituer un télescope à trois miroirs anastigmatique.

12. Dispositif selon la revendication 11, dans lequel le quotient de stéréoscopie B/H est compris entre 0,25 et 0,35.

13. Dispositif selon l'une quelconque des revendications 1 à 12, dans lequel l'émetteur LIDAR (1) est adapté pour produire le rayonnement LIDAR primaire avec une première longueur d'onde comprise entre 0,3 µm et 1,6 µm, et dans lequel le système d'imagerie stéréoscopique (20) est adapté pour former et saisir des images dans toute bande de longueurs d'onde comprises entre 0,3 µm et 1,6 µm.

14. Dispositif selon l'une quelconque des revendications 1 à 12, dans lequel l'émetteur LIDAR (1) est adapté pour produire le rayonnement LIDAR primaire avec une première longueur d'onde comprise entre 0,3 µm et 1 µm, et une deuxième longueur d'onde comprise entre 0,7 µm et 1,6 µm, et dans lequel le système d'imagerie stéréoscopique (20) est adapté pour former et saisir des images dans toute bande de longueurs d'onde comprises entre 0,3 µm et 1,6 µm.

15. Procédé de mesure d'une épaisseur de couverture végétale présente à la surface de la Terre, ou de caractérisation d'un relief terrestre sous couverture végétale, utilisant un dispositif de mesure altimétrique (100) selon la revendication 13, embarqué à bord d'un aéronef ou d'un satellite.

16. Procédé de mesure bathymétrique à travers un volume aquatique présent à la surface de la Terre, utilisant un dispositif de mesure altimétrique (100) selon la revendication 14, embarqué à bord d'un aéronef ou d'un satellite.

## Patentansprüche

1. Höhenmessvorrichtung (100), die angepasst ist, an Bord eines Flugzeugs oder eines Satelliten mitgeführt zu werden und vom Flugzeug bzw. Satelliten aus eine Höhenmessung eines auf der Erdoberfläche befindlichen Reliefs oder eine Sondierung eines auf der Erdoberfläche befindlichen halbtransparenten Volumens auszuführen, wobei die Vorrichtung Folgendes umfasst:
- ein LIDAR-System (10), das seinerseits Folgendes beinhaltet:
• einen LIDAR-Sender (1), der angepasst ist, eine primäre LIDAR-Strahlung zu erzeugen, wobei die Vorrichtung (100) eingerichtet ist, die primäre LIDAR-Strahlung an die Oberfläche der Erde (T) zu übertragen,
• einen Spiegelstrahlungssammler (5), der angeordnet ist, eine von der Erdoberfläche zurückgestreute LIDAR-Strahlung zu sammeln, und
• einen LIDAR-Empfänger (2), der angeordnet ist, die zurückgestreute und gesammelte LIDAR-Strahlung zu empfangen; und
- ein stereoskopisches Bildgebungssystem (20), das seinerseits Folgendes beinhaltet:
• eine Bilderzeugungseinheit, die eingerichtet ist, Bilder in einer Fokalebene (PF) zu erzeugen, und
• zwei in der Fokalebene (PF) der Bilderzeugungseinheit angeordnete Bilddetektoren (11, 12) zum Erfassen jeweiliger Bilder zweier versetzter Abschnitte der Erdoberfläche durch die Bilderzeugungseinheit entlang zweier verschiedener Sichtlinien (L₁, L₂),
wobei die Vorrichtung (100) **dadurch gekennzeichnet ist, dass** der Strahlungssammler (5) eine für das LIDAR-System (10) und die Bilderzeugungseinheit des stereoskopischen Bildgebungssystems (20) gemeinsame Optik für die beiden Sichtlinien (L₁, L₂) umfasst, wobei die Vorrichtung eingerichtet ist, einen ersten Teil einer vom Strahlungssammler (5) gesammelten Gesamtstrahlung zum LIDAR-Empfänger (2) und einen zweiten Teil der gesammelten Gesamtstrahlung zu den beiden Bilddetektoren (11, 12) des stereoskopischen Bildgebungssystems zu lenken.

2. Vorrichtung nach Anspruch 1, ferner umfassend einen Strahlteiler (4), der angeordnet ist, den ersten Teil der vom Strahlungssammler (5) gesammelten Gesamtstrahlung zum LIDAR-Empfänger (2) und den zweiten Teil der gesammelten Gesamtstrahlung zu den beiden Bilddetektoren (11, 12) des stereoskopischen Bildgebungssystems (20) zu lenken.

3. Vorrichtung nach Anspruch 2, wobei der Strahlteiler (4) ein halbreflektierendes Plättchen ist.

4. Vorrichtung nach einem der vorangehenden Ansprüche, wobei der Spiegelstrahlungssammler (5) ferner angeordnet ist, die vom LIDAR-Sender (1) erzeugte primäre LIDAR-Strahlung zur Oberfläche der Erde (T) zu übertragen.

5. Vorrichtung nach Anspruch 4, wobei der LIDAR-Sender (1) angepasst ist, die primäre LIDAR-Strahlung mit einer ersten linearen Polarisation zu erzeugen, wobei das LIDAR-System (10) ferner Folgendes beinhaltet:
- ein zwischen dem LIDAR-Sender (1) und dem Strahlungssammler (5) angeordnetes Lambda-Viertel-Plättchen (31) zum Übertragen der primären LIDAR-Strahlung durch Umwandeln der ersten linearen Polarisation in eine erste zirkulare Polarisation der vom Strahlungssammler übertragenen primären LIDAR-Strahlung und zum Übertragen der zurückgestreuten und gesammelten LIDAR-Strahlung mit einer der ersten zirkularen Polarisation entgegengesetzten zweiten zirkularen Polarisation in umgekehrte Richtung durch Umwandeln der zweiten zirkularen Polarisation in eine zur ersten linearen Polarisation senkrechte zweite lineare Polarisation; und
- einen Linearpolarisationsteiler (32), der angeordnet ist, einerseits die vom LIDAR-Sender (1) erzeugte primäre LIDAR-Strahlung zum Lambda-Viertel-Plättchen (31) zu lenken und andererseits, die zurückgestreute und gesammelte und vom Lambda-Viertel-Plättchen übertragene LIDAR-Strahlung zum LIDAR-Empfänger (2) zu lenken.

6. Vorrichtung nach Anspruch 4, wobei das LIDAR-System (10) ferner einen Spiegel (3) beinhaltet, der angeordnet ist, die zurückgestreute und gesammelte LIDAR-Strahlung zum LIDAR-Empfänger (2) zu reflektieren, wobei der Spiegel eine Öffnung (30) aufweist, die eingerichtet ist, die vom LIDAR-Sender (1) erzeugte primäre LIDAR-Strahlung zum Strahlungssammler (5) zu übertragen.

7. Vorrichtung nach einem der vorangehenden Ansprüche, ferner umfassend einen gemeinsamen Träger (14), der angeordnet ist, die beiden Bilddetektoren (11, 12) des stereoskopischen Bildgebungssystems (20) gemeinsam zu tragen, wobei der gemeinsame Träger ferner den LIDAR-Empfänger (2) trägt.

8. Vorrichtung nach Anspruch 7, wobei der gemeinsame Träger (14) ferner einen dritten Bilddetektor (13) trägt, der angepasst ist, einen Teil der zurückgestreuten LIDAR-Strahlung, der über die Bilderzeugungseinheit des stereoskopischen Bildgebungssystems (20) empfangen wurde, zu detektieren und ein Bild eines dritten Abschnitts der Erdoberfläche, das durch die Bilderzeugungseinheit mit dem Teil der zurückgestreuten LIDAR-Strahlung erzeugt wurde, zu erfassen.

9. Vorrichtung nach einem der vorangehenden Ansprüche, wobei das LIDAR-System (10) und das stereoskopische Bildgebungssystem (20) so angeordnet sind, dass eine Ausrichtungsrichtung (D₀) des LIDAR-Systems winkelmäßig in der Mitte der beiden Sichtlinien (L₁, L₂) des stereoskopischen Bildgebungssystems angeordnet ist.

10. Vorrichtung nach einem der vorangehenden Ansprüche, ferner umfassend eine Reihe zusätzlicher Spiegel (21, 22), die mit den beiden Bilddetektoren (11, 12) des stereoskopischen Bildgebungssystems (20) verbunden sind, um mit Positionen der beiden Bilddetektoren die beiden Sichtlinien (L₁, L₂) des stereoskopischen Bildgebungssystems durch den Strahlungssammler (5) zu bestimmen.

11. Vorrichtung nach einem der vorangehenden Ansprüche, wobei:
- die beiden Bilddetektoren (11, 12) des stereoskopischen Bildgebungssystems (20) so angeordnet sind, dass die beiden Sichtlinien (L₁, L₂) des stereoskopischen Bildgebungssystems winkelmäßig um 2 x Arctan (0,5 x B/H) beabstandet sind, wobei B/H einen Stereoskopiequotienten im Bereich von 0,2 bis 0,4 bezeichnet; und
- für jede Sichtlinie (L₁, L₂) der Strahlungssammler (5) einen Abschnitt eines konkaven Primärspiegels (M₁), einen Abschnitt eines konvexen Sekundärspiegels (M₂) und einen Abschnitt eines dritten konkaven Spiegels (M₃) umfasst, wobei die Spiegel eingerichtet sind, ein anastigmatisches Teleskop mit drei Spiegeln auszubilden.

12. Vorrichtung nach Anspruch 11, wobei der Stereoskopiequotient B/H im Bereich von 0,25 bis 0,35 liegt.

13. Vorrichtung nach einem der Ansprüche 1 bis 12, wobei der LIDAR-Sender (1) angepasst ist, die primäre LIDAR-Strahlung mit einer ersten Wellenlänge im Bereich von 0,3 µm bis 1,6 µm zu erzeugen, und wobei das stereoskopische Bildgebungssystem (20) angepasst ist, Bilder in jeder Wellenlängenbandbreite im Bereich von 0,3 µm bis 1,6 µm zu erzeugen und zu erfassen.

14. Vorrichtung nach einem der Ansprüche 1 bis 12, wobei der LIDAR-Sender (1) angepasst ist, die primäre LIDAR-Strahlung mit einer ersten Wellenlänge im Bereich von 0,3 µm und 1 µm und einer zweiten Wellenlänge im Bereich von 0,7 µm bis 1,6 µm zu erzeugen, und wobei das stereoskopische Bildgebungssystem (20) angepasst ist, Bilder in jeder Wellenlängenbandbreite im Bereich von 0,3 µm bis 1,6 µm zu erzeugen und zu erfassen.

15. Verfahren zum Messen der Dicke einer auf der Erdoberfläche vorhandenen Vegetationsschicht oder zur Charakterisierung eines Erdreliefs unter einer Vegetationsschicht unter Verwendung einer Höhenmessvorrichtung (100) nach Anspruch 13, die an Bord eines Flugzeugs oder eines Satelliten mitgeführt wird.

16. Verfahren zur bathymetrischen Messung durch ein auf der Erdoberfläche vorhandenes Wasservolumen unter Verwendung einer Höhenmessvorrichtung (100) nach Anspruch 14, die an Bord eines Flugzeugs oder eines Satelliten mitgeführt wird.

## Claims

1. Altimetric measurement device (100) adapted to be carried on board an aircraft or a satellite and to perform from said aircraft or satellite, an altitude measurement of a relief located at the surface of the Earth or a sounding of a semi-transparent volume located at said surface of the Earth, said device comprising:
- a LIDAR system (10), in turn comprising:
. a LIDAR transmitter (1) configured to generate a primary LIDAR radiation, the device (100) being configured to transmit the primary LIDAR radiation to the surface of the Earth (T),
. a mirror-based radiation collector (5) disposed so as to collect a LIDAR radiation backscattered by said surface of the Earth, and
. a LIDAR receiver (2) disposed so as to receive the backscattered and collected LIDAR radiation; and
- a stereoscopic imaging system (20), in turn comprising:
. an image forming assembly configured to form images in a focal plane (PF), and
. two image detectors (11, 12) disposed in the focal plane (PF) of the image forming assembly for capturing respective images of two offset portions of the surface of the Earth, through the image forming assembly along two different lines of sight (L₁, L₂),
the device (100) being **characterized in that** the radiation collector (5) comprises an optical system common to the LIDAR system (10) and to the image forming assembly of the stereoscopic imaging system (20) for the two lines of sight (L₁, L₂), said device being configured to direct a first part of a total radiation collected by the radiation collector (5) to the LIDAR receiver (2) and a second part of said total collected radiation to the two image detectors (11, 12) of the stereoscopic imaging system.

2. Device as claimed in claim 1, further comprising a beam splitter (4) disposed so as to direct the first part of the total radiation collected by the radiation collector (5) to the LIDAR receiver (2) and the second part of said total radiation collected to the two image detectors (11, 12) of the stereoscopic imaging system (20).

3. Device as claimed in claim 2, wherein the beam splitter (4) is a semi-reflecting plate.

4. Device as claimed in any one of the preceding claims, wherein the mirror-based radiation collector (5) is also disposed so as to transmit the primary LIDAR radiation generated by the LIDAR transmitter (1) to the surface of the Earth (T).

5. Device as claimed in claim 4, wherein the LIDAR transmitter (1) is adapted to generate the primary LIDAR radiation with a first rectilinear polarisation, the LIDAR system (10) further comprising:
- a quarter-wave plate (31) disposed between said LIDAR transmitter (1) and the radiation collector (5) for transmitting the primary LIDAR radiation while transforming said first rectilinear polarisation into first circular polarisation of the primary LIDAR radiation transmitted by said radiation collector, and to transmit in the opposite direction the backscattered and collected LIDAR radiation having a second circular polarisation opposite said first circular polarisation while transforming said second circular polarisation into second rectilinear polarisation perpendicular to said first rectilinear polarisation; and
- a rectilinear polarisation separator (32) disposed so as to direct the primary LIDAR radiation generated by the LIDAR transmitter (1) to the quarter-wave plate (31) on the one hand and to direct the backscattered and collected radiation transmitted by the quarter-wave plate to the LIDAR receiver (2) on the other hand.

6. Device as claimed in claim 4, wherein the LIDAR system (10) further comprises a mirror (3) arranged for reflecting the backscattered and collected LIDAR radiation to the LIDAR receiver (2), said mirror comprising an aperture (30) arranged to transmit the primary LIDAR radiation generated by the LIDAR transmitter (1) to the radiation collector (5).

7. Device as claimed in any one of the preceding claims, further comprising a common support (14) disposed so as to support jointly the two image detectors (11, 12) of the stereoscopic imaging system (20), said common support also supporting the LIDAR receiver (2).

8. Device as claimed in claim 7, wherein the common support (14) also supports a third image detector (13) arranged to detect a part of the backscattered LIDAR radiation received through the image forming assembly of the stereoscopic imaging system (20), and to capture an image of a third portion of the surface of the Earth formed by said image forming assembly with said backscattered part of the LIDAR radiation.

9. Device as claimed in any one of the preceding claims, wherein the LIDAR system (10) and the stereoscopic imaging system (20) are disposed so that a pointing direction (D₀) of said LIDAR system is located angularly in the middle of the two lines of sight (L₁, L₂) of said stereoscopic imaging system.

10. Device as claimed in any one of the preceding claims, further comprising a series of supplementary mirrors (21, 22) co-operating with the two image detectors (11, 12) of the stereoscopic imaging system (20) in order to determine, with the positions of said two image detectors, the two lines of sight (L₁, L₂) of said stereoscopic imaging system, through the radiation collector (5).

11. Device as claimed in any one of the preceding claims, wherein:
- the two image detectors (11,12) of the stereoscopic imaging system (20) are disposed so that the two lines of sight (L₁, L₂) of said stereoscopic imaging system are angularly separated by 2 x Arctan(0.5 x B/H), B/H denoting a stereoscopic quotient of between 0.2 and 0.4; and
- for each line of sight (L₁, L₂) the radiation collector (5) comprises a portion of a primary concave mirror (M₁), a portion of a secondary convex mirror (M₂) and a portion of a third concave mirror (M₃), said mirrors being configured so as to constitute an anastigmatic three-mirror telescope.

12. Device as claimed in claim 11, wherein the stereoscopic quotient B/H is between 0.25 and 0.35.

13. Device as claimed in any one of claims 1 to 12, wherein the LIDAR transmitter (1) is configured to generate the primary LIDAR radiation with a first wavelength of between 0.3 µm and 1.6 µm, and wherein the stereoscopic imaging system (20) is configured to form and capture images in a whole band of wavelengths between 0.3 µm and 1.6 µm.

14. Device as claimed in any one of claims 1 to 12, wherein the LIDAR transmitter (1) is configured to generate the primary LIDAR radiation with a first wavelength of between 0.3 µm and 1 µm, and a second wavelength of between 0.7 µm and 1.6 µm, and wherein the stereoscopic imaging system (20) is configured to form and capture images in a whole band of wavelengths between 0.3 µm and 1.6 µm.

15. Method of measuring a thickness of vegetal cover existing at the surface of the Earth or for characterising a terrestrial relief under vegetal cover, using an altimetric measurement device (100) as claimed in claim 13 carried on board an aircraft or a satellite.

16. Method of performing bathymetric measurements through an aquatic volume existing at the surface of the Earth, using an altimetric measurement device (100) as claimed in claim 14 carried on board an aircraft or a satellite.
